# EUROPEAN PATENT SPECIFICATION

(11) **EP 2 510 707 B1**
(45) Date of publication and mention of the grant of the patent: **11.02.2015**
(21) Application number: 09801959.9
(22) Date of filing: 11.12.2009
(51) Int. Cl.: H04Q 11/00

(54) **METHOD AND DEVICE FOR DATA PROCESSING IN A PASSIVE OPTICAL NETWORK**
VERFAHREN UND EINRICHTUNG ZUR DATENVERARBEITUNG IN EINEM PASSIVEN OPTISCHEN NETZ
PROCEDE ET DISPOSITIF DE TRAITEMENT DE DONNEES DANS UN RESEAU OPTIQUE PASSIF

(43) Date of publication of application: 17.10.2012
(73) Proprietor: Xieon Networks S.à.r.l., 1748 Luxemburg (LU)
(72) Inventor: SMOLORZ, Sylvia, CA 94041, Mountain View (US); GOTTWALD, Erich, 83607 Holzkirchen (DE); SCHMIDT, Ernst-Dieter, 83620 Feldkirchen-Westerham (DE)
(74) Representative: Lucke, Andreas
(86) International application number: PCT/EP2009/066967
(87) International publication number: WO 2011/069557

(56) References cited:
- WO-A1-2009/044948
- US-A1- 2008 063 397
- US-B1- 6 684 031

## Description

The invention relates to a method and to a device for data processing in a passive optical network.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

Several PON types have been standardized and are currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers of around 1550 nm. Dense WDM uses the same transmission window but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., coherent Ultra-Dense Wavelength Division Multiplex (UDWDM) networks, are deemed to be used as a future data access.

Upstream signals may be combined by using a multiple access protocol, e.g., invariable time division multiple access (TDMA). The OLTs "range" the ONUs in order to provide time slot assignments for upstream communication. Hence, an available data rate is distributed among many subscribers. Therefore, each ONU needs to be capable of processing much higher than average data rates. Such an implementation of an ONU is complex and costly.

Thus, UDWDM with virtual point-to-links without TDMA appears to be a flexible and cost efficient solution regarding optical access networks.

In a WDM PONs, all traffic is processed by the OLT. However, peer-to-peer traffic is increasing faster than conventional IP traffic and the OLT becomes a bottleneck in the optical network. Also, broadcast services in WDM PONs currently lead to a duplication of the broadcast signal at the OLT, generating a copy of the broadcast data for each subscriber. This inflicts a huge data amount to be processed at the OLT and thus results in a high power consumption and congestion.

In mobile backhaul solutions, direct communication between base stations (BTS) can be used dissolving congestion. Pursuant to an X2 interface, an Ethernet switch at the intersection point between upstream lines of adjacent BTSs is used to allow for direct communication. If the uplink is connected via an optical fiber, an optical-electrical-optical conversion and therefore a powered node are required.

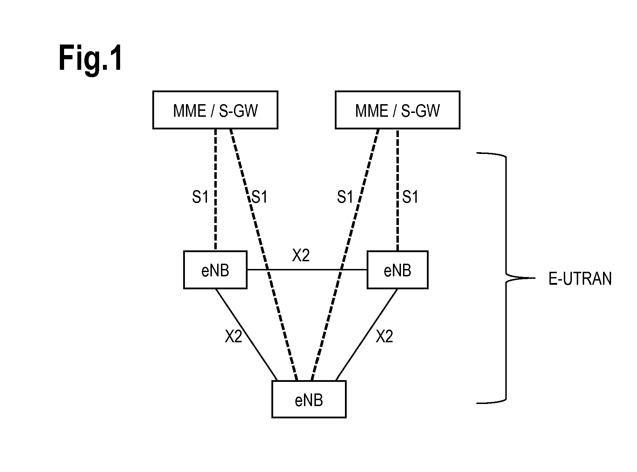

**Fig.1** shows the X2 interface pursuant to ETSI TS 136 300 V8.8.0 (2009-04). Further details about the X2 interface can be found in ETSI TS 136 401 (V8.5.0) and ETSI TS 136423 (V8.5).

Document D1 US 6 684 031 B1 discloses an Ethernet fiber access communication system where the downstream data and upstream data are logically or physically separated, e.g. two different wavelengths are used for downstream and upstream signals. A portion of the upstream signal is back reflected to each of the subscriber units for internal communication.

The **problem** to be solved is to overcome the disadvantages pointed out above and in particular to provide an efficient communication in an optical network, e.g., between ONUs and OLTs without increasing a load for a centralized station and without reducing the PON's capacity.

This problem is solved according to the features of the independent claims. Further embodiments result from the depending claims.

In order to overcome this problem, a method for data processing in a passive optical wavelength division multiplex network transmitting bidirectional data signals via different wavelengths between an optical line terminal and optical network units ONUs (optical network units), comprising the steps of
- distributing the downstream wavelengths into a first portion of wavelengths for communication with ONUs of a first area, and
- into a second portion of wavelengths for communication with ONUs of a second area,
- wherein in the first area a first resource of upstream wavelengths passes a first splitter in uplink direction and wherein a second resource of upstream wavelengths is reflected for communication in the first area, and
- wherein in the second area the second resource of upstream wavelengths passes a second splitter in uplink direction and wherein the first resource of upstream wavelengths is reflected for communication in the second area, and wherein the first resource and the second resource of wavelength are disjoint.

Advantageously, the solution provided does not reduce the PON's capacity by occupying wavelengths usable for upstream and downstream traffic between ONUs and OLTs. Also, the approach allows for the PON to largely remain a passive network. Furthermore, a multi-vendor network over the same fiber infrastructure can be implemented and supported.

It is noted that uplink (upstream) direction refers to a direction from a subscriber (e.g., connected to an ONU) towards the optical network, in particular an OLT of the optical network. Downlink (downstream) direction hence refers to an opposite direction towards the subscriber or the ONU to which the subscriber is connected. Hence, the second resource mentioned above sent in upstream direction is in particular reflected in downlink direction.

It is further noted that the second resource being reflected may indicate a partial reflection only. The reflection referred to herein may not be a 100% reflection because of losses of the reflection means used.

It is also noted that the splitter may be a passive optical component, in particular a passive splitter or a passive filter.

The ONU (also referred to as ONT) used herein refers to an optical component that is used in the sphere of a subscriber and can be implemented as a device that provides the subscribers with various types of broadband services. The OLT is an optical component that is used in the optical network to provide optical signals to several ONUs, e.g., via at least one (active or passive) splitter or filter.

Hence, the splitter efficiently sets up an area of the optical network that may utilize the second resource without any detrimental impact on the optical network beyond the splitter, in particular with regard to the core optical network and/or the OLT.

Hence, the wavelengths emitted from an optical network component (e.g., an ONU in uplink direction towards an OLT) only pass the splitter if they match the first resource (e.g., predefined wavelength or set of wavelengths to pass the filter).

In an embodiment, the first resource comprises a wavelength or a set of wavelengths and the second resource comprises a wavelength or a set of wavelengths.

It is noted that the wavelength may comprise a wavelength band or range of wavelengths; furthermore, a frequency may be used to determine the resource accordingly. It is noted that the wavelength and the frequency both are terms that describe the resource and either term could be used.

In another embodiment, the splitters are passive splitters.

In a further embodiment, the splitters are deployed (on a communication path) between optical network units and an optical line terminal.

In a next embodiment, the splitters comprise as reflective filter at least one dielectric filter and/or a waveband selective reflective filter and/or a partially reflecting mirror.

It is also an embodiment that all resources but the first resource of wavelengths transmitted in uplink direction are reflected in downlink direction at the splitter.

Pursuant to another embodiment, the second resource is at least partially substantially located in a guard band of the first resource.

Hence, a guard band between wavelengths of the first resource can be used for wavelengths (second resource) that are reflected at the splitter.

According to an embodiment, a broadcast service is provided to the splitter via a second fiber utilizing a third resource of wavelengths, wherein the first resource and the third resource of wavelengths are disjoint.

Hence, a broadcast service can be provided towards the splitter and the subscribers or components beyond this splitter (in downlink direction) via said fiber. The third resource (a wavelength or a wavelength band or a set of wavelengths) can be used for such a broadcast service via the separate fiber. An OLT that is connected to the splitter via the original fiber is bypassed and the processing load for this OLT is significantly reduced.

According to another embodiment, the second resource is utilized for communication purposes within an optical sub-network beyond the splitter.

Here, beyond the splitter may define an area or optical sub-network that is separated from the "uplink" optical network. The second resource used within the optical sub-network would not disturb the uplink optical network as it would not pass the splitter. Therefore, the second resource, e.g., wavelength(s), can be efficiently utilized to provide communication or services to said optical sub-network. In other words, the optical sub-network is encapsulated within the optical network, wherein only the first resource passing the splitter is used for communicating with the uplink optical network.

In yet another embodiment, a content server utilizes at least a portion of the second resource to convey services to subscribers of the optical sub-network.

Said content server may be any device providing (e.g., streaming) data for at least one user or subscriber of the optical sub-network. The content server may be operated by a particular vendor. Several content servers may be deployed accordingly.

The content server may be a content server utilized for break out purposes; therefore, the content server can exchange content and/or signalling information via the first resource and/or the second resource. The content server may convey content to the base stations (eNBs) of the optical sub-network. Utilizing the optical network for conveying IP traffic, the load to the mobile network can be significantly reduced.

It is noted that "break out" or "local break out" refers to a concept that allows bypassing traffic, in particular bulky IP traffic.

According to a next embodiment, base stations are connected via the optical sub-network communicating via at least a portion of the second resource.

Hence, the base stations may be base stations of a mobile (or cellular) network; the base stations could be eNBs or FEMTO access points communicating with one another across the optical sub-network. This efficiently enables X2 interface communication among base stations.

It is noted that a FEMTO cell (or a FEMTO access point or a FEMTO access gateway) is a type of base station that may be deployed inside a coverage area of a typical (macro) base station (e.g., an LTE eNB) of a wireless network (which is also referred to herein as wide area cell). The FEMTO cell may have a reduced maximum transmit power compared to the wide area cell and may typically be used indoor, e.g., to cover private residences or public areas (e.g., offices). The FEMTO cell is also referred to as home base station or home eNB and may be abbreviated hereinafter as HeNB.

Pursuant to yet an embodiment, an optical line terminal utilizes at least a portion of the second resource to convey services to subscribers of the optical sub-network.

Hence, an OLT can be provided within said optical sub-network conveying optical data towards the subscribers of the optical sub-network or providing a hierarchical structure within the optical sub-network (e.g., a further sub-network in downlink direction). This approach bears the advantage of multi-vendor support, wherein several vendors (e.g., operators, service providers) may utilize this structure to supply (and sell) particular services throughout the optical sub-network(s).

According to a further embodiment, an OBSAI processing unit utilizes at least a portion of the second resource to communicate data with components of the optical sub-network or the OBSAI processing unit utilizes at least a portion of the first resource to communicate data via the optical network with a mobile network operator.

It is noted that the data processed (e.g., received and/or transmitted) by the OBSAI processing unit may be signalling data and/or content to be processed to base stations deployed within the optical sub-network or to the mobile network operator via the optical network (utilizing the first resource to convey information past the optical sub-network).

Pursuant to an embodiment, a FEMTO access point utilizes at least a portion of the second resource to communicate data with components of the optical sub-network or the FEMTO access point utilizes at least a portion of the first resource to communicate data via the optical network with a mobile network operator.

Hence, the mobile network operator (MNO) can efficiently utilize the optical sub-network to reduce the load over his cellular network. The MNO can thus use the optical sub-network for setting up a separate network. Due to the separation of these networks, a high flexibility is provided to allow for several MNOs to administer their network portions.

It is noted that the data processed (e.g., received and/or transmitted) by the FEMTO access point may be signalling data and/or content to be processed.

The problem stated supra is also solved by an optical network device in an optical wavelength division multiplexing optical network arranged for performing the method steps according to any of the preceding claims, comprising reflective filters that are arranged such that
- a first resource of wavelengths passes a first splitter in uplink direction and a second resource of wavelengths is reflected in downlink direction; and
- the second resource of wavelengths passes a second splitter in uplink direction and the first resource of wavelengths is reflected in downlink direction.

Such optical network element may be a passive optical component, in particular a splitter or a filter.

It is noted that the features stated above also apply in combination with the device, e.g., the optical network element mentioned herein.

The problem stated above is also solved by an optical network element comprising a control unit that is arranged such that the method as described herein can be executed.

The problem stated supra is further solved by an optical communication system comprising the one optical network element as described herein.

Embodiments of the invention are shown and illustrated in the following figures:
- Fig. 2: shows a schematic diagram visualizing a PON with two areas that provide for an internal capacity utilized for ONU-to-ONU traffic;
- Fig. 3: shows a transmission diagram that visualizes communications between the OLT and the ONU and a reflection diagram that visualizes communication between the ONUs, wherein guard bands within the band range of the transmission diagram can be used for reflecting the optical signals;
- Fig. 4: shows an alternative embodiment based on the schematic diagram of Fig.2;
- Fig. 5: shows a schematic diagram comprising a network utilizing a separate fiber to provide broadcast services;
- Fig. 6: shows a schematic diagram visualizing a PON with two areas that provide for an internal capacity utilized for ONU-to-ONU traffic, wherein a mobile network operator (MNO) can create his own network based on the optical infrastructure utilizing an "OBSAI" transport;
- Fig. 7: shows a schematic diagram visualizing a PON with two areas utilized for ONU-to-ONU traffic, wherein a mobile network operator (MNO) can create his own network based on the optical infrastructure utilizing a FEMTO gateway and/or a content server for local break out purposes.

The solution provided in particular suggests an economical PON with measures to establish additional VPN traffic capacity based on a passive equipment. For that purpose, waveband selective reflective filters can be deployed at the output (downlink direction) of WDM multiplexer(s) or at the input (uplink direction) of a splitter.

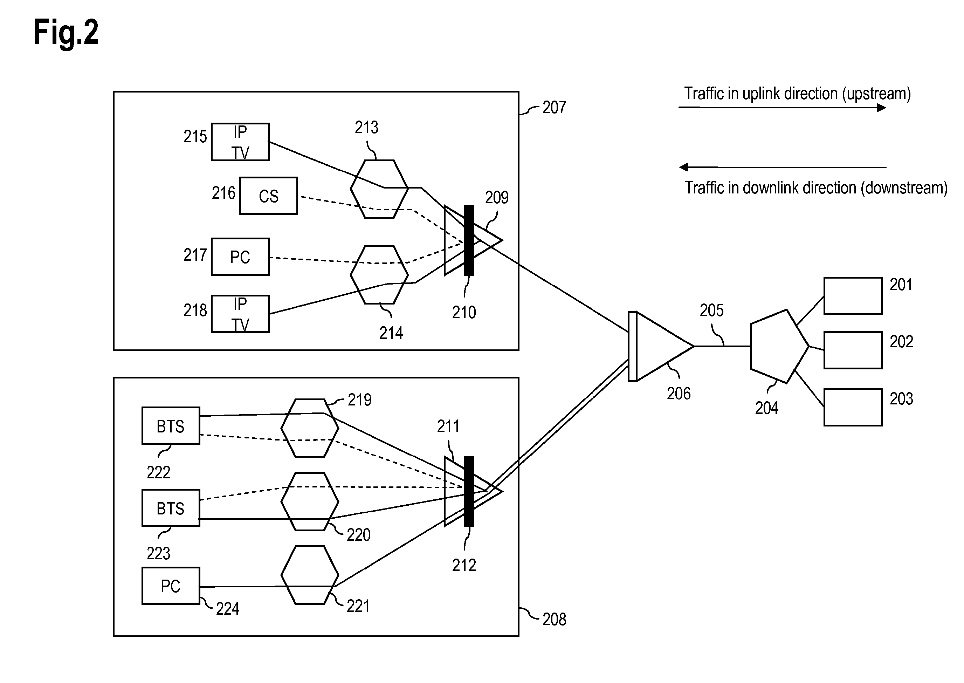

**Fig.2** shows a schematic diagram visualizing a PON with two areas that provide for an internal capacity utilized for ONU-to-ONU traffic.

An access gateway (aGW) 201, an Internet provider 202 and a video on demand server 203 are connected to an OLT 204. Each of the entities or units 201 to 203 is assigned to a particular wavelength or a set of wavelengths.

The OLT 204 conveys a combined optical signal 205, e.g., with a bitrate of 1Gbps per wavelength towards a filter 206. Said filter 206 can be a reflective multi-frequency filter that enables internal traffic for several areas. The filter 206 may distribute the wavelengths received via the optical signal in downlink direction towards areas 207 and 208, wherein a first portion of wavelengths is used to communicate with area 207 and a second portion of wavelengths is used to communicate with area 208.

The filter 206 conveys the wavelengths utilized by/for the access gateway 201 and the Internet provider 202 towards the area 208 and the at least one wavelength utilized by/for the video on demand server 203 towards the area 207. It is noted that the two lines between the area 208 and the filter 206 indicate two wavelengths or set of wavelengths utilized for such communication. These several wavelengths can be conveyed via one optical fiber (hence the two lines indicate a logical connection and do not require a corresponding number of physical fibers).

The area 207 is connected to the filter 206 via a passive splitter 209 with a reflector 210 (e.g., a semitransparent filter or a reflective multi-frequency filter). Only the at least one wavelength utilized with regard to the video on demand server 203 can pass the splitter 209 in uplink direction towards the OLT. This allows for the area 207 to internally utilize other wavelengths (that would not pass the splitter 209 towards the OLT) without having any detrimental effect on the PON beyond the area 207.

Within area 207, an IP TV application 215 is connected via an ONU 213 to the splitter 209 and an IP TV application 218 is connected via an ONU 214 to the splitter 209. Both IP TV applications 215, 218 may exchange data with (in particular receive data from) the video on demand server 203 via the OLT 204.

In addition, a content server CS 216 is connected to the ONU 213 conveying data to (and/or from) a personal computer PC 217 via the splitter 209 and the ONU 214 (to which the PC 217 is connected) utilizing a wavelength that cannot pass the reflector 210 of the splitter 209. Hence, this particular wavelength used between the CS 216 and the PC 217 is "encapsulated" within the area 207 as it cannot pass the splitter 209 and hence it cannot impose any disturbance on the PON beyond the area 207.

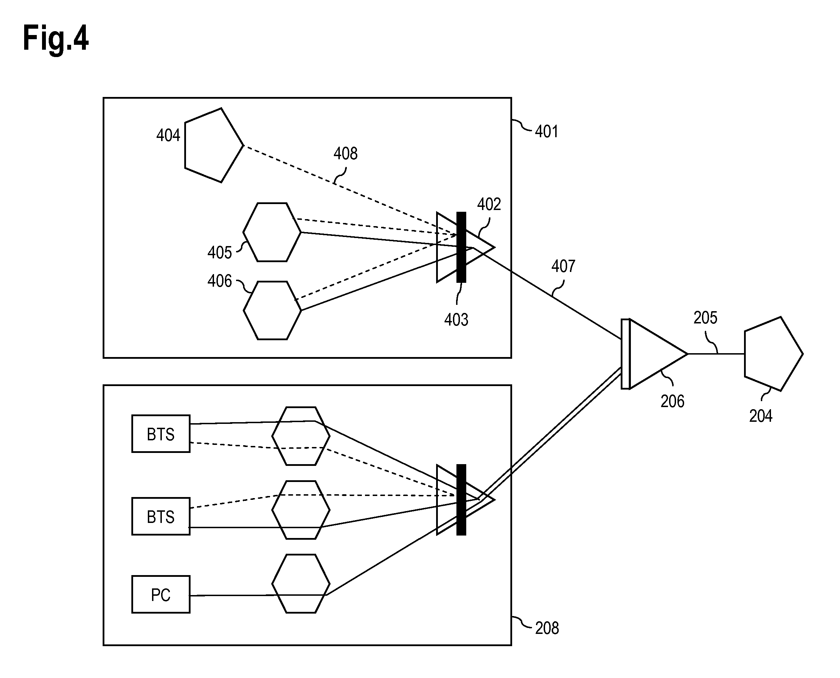

With this approach, several wavelengths that are not used by the PON for this particular area 207 can be utilized internally for communicating, e.g., between ONUs or applications or components attached to the ONUs. It is also possible that instead of such ONU any optical network component, e.g., an OLT for a sub-network can be deployed (see also Fig.4).

The area 208 comprises a splitter 211 with a reflector 212 that is realized such that only wavelengths used by/for the Internet provider 202 and the access gateway 201 pass this splitter 211. Other wavelengths can be used within the area 208, wherein such usage is invisible to the remaining network outside of area 208 and thus would not disturb the PON. In the example of Fig.2, a personal computer PC 224 is connected via an ONU 221 to the splitter 211 and communicates with the Internet provider 202 via the PON (i.e. via the OLT 204). A base station BTS 222 is connected via an ONU 219 to the splitter 211 and communicates with the access gateway 201 across the PON. Accordingly, a base station BTS 223 is connected via an ONU 220 to the splitter 211 and communicates with the access gateway 201 across the PON.

In addition, a different wavelength (or set of wavelengths) that would not get past the splitter 211 and thus cannot disturb the PON outside area 208 is used for communication purposes between the BTS 222 and the BTS 223. This way, an X2 interface between these base stations 222, 223 can be realized without any detrimental impact on the PON outside the area 208.

It is noted that the distance between the devices attached to the ONUs 213, 214, 219, 220, 221 and the devices attached to the OLT 204 may amount to about 100km (or less).

The encapsulation of the areas 207, 208 utilizing wavelengths for internal communication purposes can be provided at the splitters 209, 211 as shown in Fig.2. Said splitter may be realized as waveband selective reflective filter that passes all wavelengths that are used for communication between the OLT 204 and the ONUs and it may reflect wavelengths that are located, e.g., within guard bands of the WDM multiplexing and/or demultiplexing elements.

The internal traffic within the areas 207, 208 is indicated by dashed lines, which are reflected at the reflector 210 of splitter 209 or reflector 212 of splitter 211.

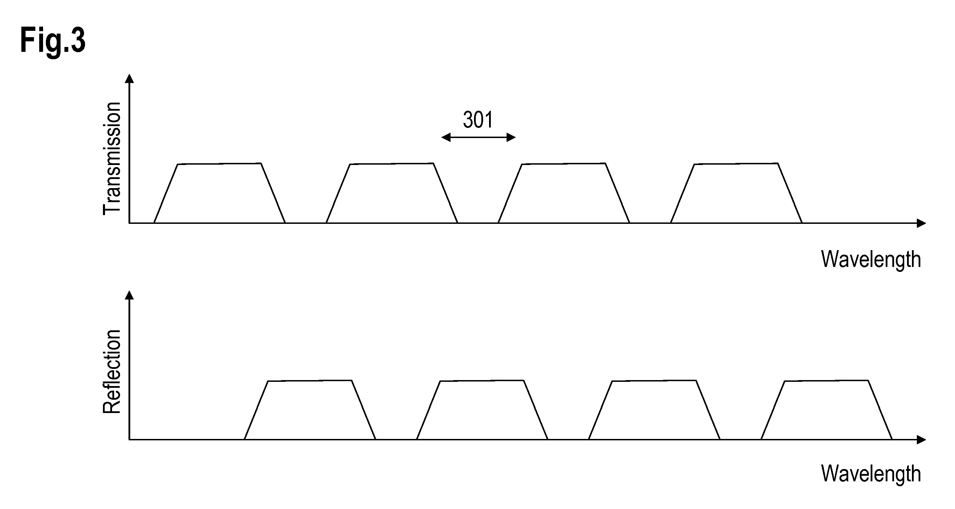

**Fig.3** shows a transmission diagram that visualizes communications between the OLT and the ONU and a reflection diagram that visualizes communication between the ONUs. Guard bands 301 within the band range of the transmission diagram can be used for reflecting the optical signals that are utilized in the respective area 207, 208 only. Hence, it can be known at the design stage, which first set of wavelengths is to be used for communication between the ONUs and the OLT and which second set of wavelengths (which is disjoint from this first set of wavelengths) is to be used for communication within the area, e.g., for communication between the ONUs.

The reflection means can be realized based on dielectric filters, which can be used as reflective filters at the splitter inputs. This design allows area internal traffic via reflection and splitting - the wavelengths can thus be limited to the WDM guard bands.

As an option, filter solution may be utilized reflecting all wavelengths except the wavelengths used for communication between the OLT and the ONUs.

It is also an option that an at least partially reflecting mirror solution is provided.

As shown in Fig.2, the CS 216 is connected to the ONU 213 and thus broadcasting can be enabled without producing any load to the OLT 204, which in this scenario is bypassed.

**Fig.4** shows an alternative embodiment based on the schematic diagram of Fig.2. In particular, reference signs as already used in Fig.2 refer to the same items or entities as described with regard to Fig.2.

A wavelength (or set of wavelengths) 407 is used to convey data between the OLT 204 and an area 401. The wavelength 407 is disjoint from any additional wavelength used (encapsulated) within this area 401. The encapsulation is provided by a splitter 402 with a reflector 403. This reflector only allows the wavelength 407 to pass towards the OLT, any other wavelength arriving at the splitter 402 (uplink direction) is reflected back into said area 401. The area 401 comprises an ONU 405 that is connected to the splitter 402 and an ONU 406 that is connected to the splitter 402. Both ONUs may inter-work with the PON via said wavelength 407 (as indicated by the solid lines).

In addition, area 401 comprises another OLT 404 which uses a wavelength 408 (or a set of wavelengths) that cannot get past the splitter 402 and thus cannot reach the PON (in uplink direction) beyond said splitter 402. However, the wavelength 408 is reflected at the splitter 402 and can be used for communication purposes between the OLT 404 and the ONUs 405, 406. The OLT 404 may be (in downlink direction) connected to additional optical components (not shown in Fig.4).

The internal traffic within the area 401 is indicated by dashed lines, which are reflected at the reflector 403 of splitter 402.

Pursuant to the embodiment of Fig.4, several OLTs can be deployed, e.g., within each area 401. This allows enhancing the use of fiber capacity by providing sub-networks utilizing the same fiber infrastructure. This concept efficiently supports multi-vendor networking, i.e. several operators or network providers can supply services in an efficient manner throughout predefined sub-networks.

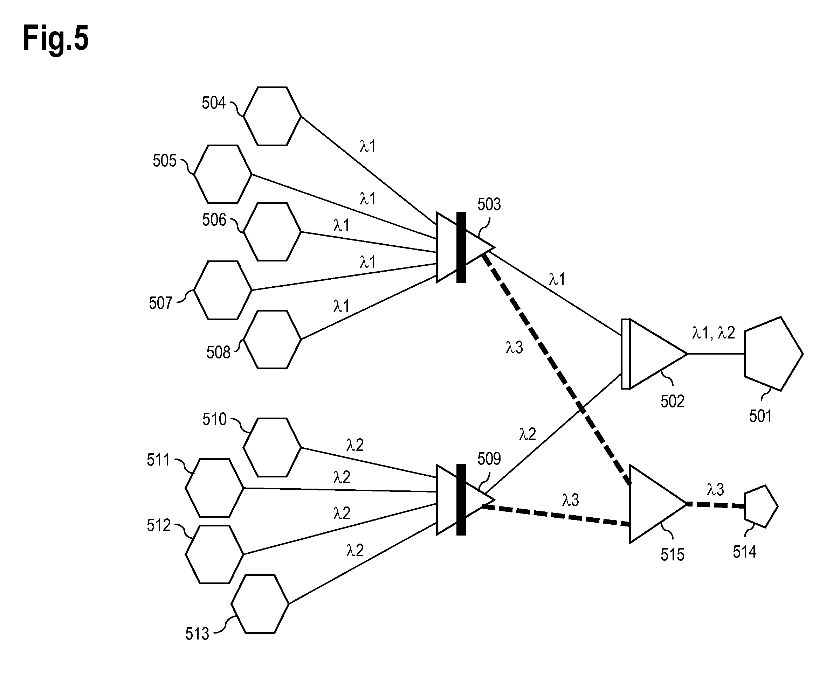

**Fig.5** shows a schematic diagram comprising a network utilizing a separate fiber to provide broadcast services.

An OLT 501 conveys data via an optical fiber to a filter 502 and further to several splitters 503, 509, which correspond to the reflective splitter or reflective filter as described above. The splitter 503 is connected to several ONUs 504 to 508 and the splitter 509 is connected to several ONUs 510 to 513.

In addition, a broadcast server 514 is connected via a splitter 515 to said splitters 503 and 509. The broadcast server 514 may thus reach the splitters 503, 509 and the attached ONUs 504 to 508 and 510 to 513. The broadcast server 514 uses a wavelength (here indicated as wavelength λ3) that is not used for the communication between the ONUs and the OLT 501. In the example shown in Fig.5, the OLT 501 utilizes wavelengths λ1 and λ2, wherein wavelength λ1 is used towards splitter 503 and wavelength λ2 is used towards splitter 509. The broadcast server 514 uses a disjoint wavelength λ3 for reaching the ONUs via said splitters 503, 509.

Hence, two fibers are used, one for the non-broadcast traffic and one for the broadcast traffic, wherein the broadcast traffic is conveyed via the colorless passive splitter 515 and is fed into the network via said reflective splitters 503, 509. It is noted that the reflector of the splitters 503, 509 allows the wavelength λ3 to pass (at least in downlink direction).

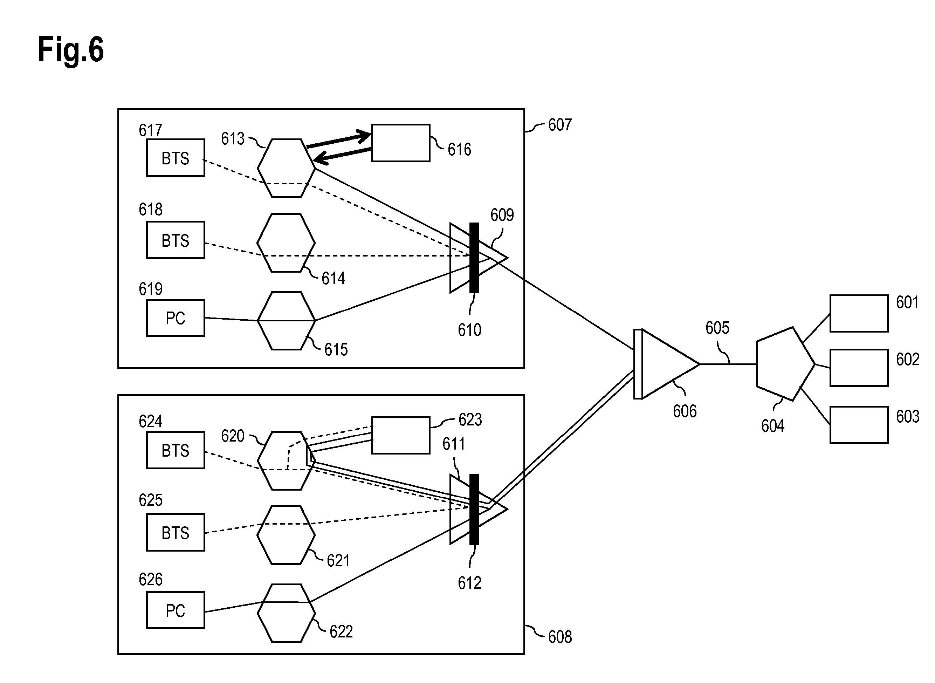

**Fig.6** shows a schematic diagram visualizing a PON with two areas that provide for an internal capacity utilized for ONU-to-ONU traffic, wherein a mobile network operator (MNO) can create his own network based on the optical infrastructure utilizing an "OBSAI" transport.

An access gateway (aGW) 601 (and/or a RNC, GGSN, ASN-GW, S-GW), an Internet provider 602 and a video on demand server 603 are connected to an OLT 604. Each of the entities or units 601 to 603 is assigned to a particular wavelength or set of wavelengths.

The OLT 604 conveys a combined optical signal 605, e.g. with a bitrate of 1Gbps per wavelength, towards a filter 606. Said filter 606 can be a reflective multi-frequency filter that enables internal traffic for several areas.

The filter 606 conveys the traffic between the OLT and the ONUs towards an area 608 and an area 607.

The area 607 is connected to the filter 606 via a passive splitter 609 with a reflector 610 (e.g., a semitransparent filter or a reflective multi-frequency filter). The splitter can also be realized as a reflective multi-frequency filter. With regard to the splitter's functionality, reference is made to the splitters 209, 211 and 402 as described above.

Accordingly, the area 608 is connected to the filter 606 via a passive splitter 611 with a reflector 612. Also, with regard to this splitter 611, reference is made to the splitters 209, 211 and 402 described above.

With regard to the area 607, a PC 619 is connected via an ONU 615 to the splitter 609 to communicate with the OLT 604. In addition, an ONU 613 is connected via the splitter 609 to the OLT 604, wherein a central OBSAI processing unit 616 exchanges signaling information 627 with the ONU 613. A BTS 617 is connected to the ONU 613 and a BTS 618 is connected to an ONU 614, wherein the BTS 613 and 618 exchange data via the optical network of area 607 utilizing a wavelength that is reflected at the splitter 610 and is thus encapsulated within the area 607 without disturbing the OLT 604.

Hence, the BTS 617 and the BTS 618 may provide a digital fronthaul, e.g., an OBSAI RP3 Interface with a bitrate of 9Gbps. The central OBSAI processing is done by said unit 616.

With regard to the area 608, the splitter 611 is connected via an ONU 622 to a PC 626 and via an ONU 620 to an OBSAI processing unit 623, which in this case transmits and/or receives content to/from the OLT 604.

In addition, the OBSAI processing unit 623 communicates via an additional wavelength that also passes the splitter 611 with the access gateway 601 of the PON, e.g., to receive LTE data.

A BTS 624 is connected to the ONU 620 and a BTS 625 is connected to an ONU 621, wherein the BTS 624 and 625 exchange data via the optical network of area 608 utilizing a wavelength that is reflected at the splitter 611 and is thus encapsulated within the area 608 without disturbing the OLT 604. Hence, the BTS 624 and the BTS 625 may provide a digital fronthaul, e.g., an OBSAI RP3 Interface with a bit rate of 9Gbps. The central OBSAI processing is done by said unit 623.

As indicated, the OBSAI processing unit 623 by providing a content server enables a LBO (local break out) solution for the MNO. Thus, Internet traffic may be separated from the traffic, which is directed to the MNO equipment. In addition, local traffic could be processed within the area 608 without any need to relay such traffic through the MNO backbone equipment.

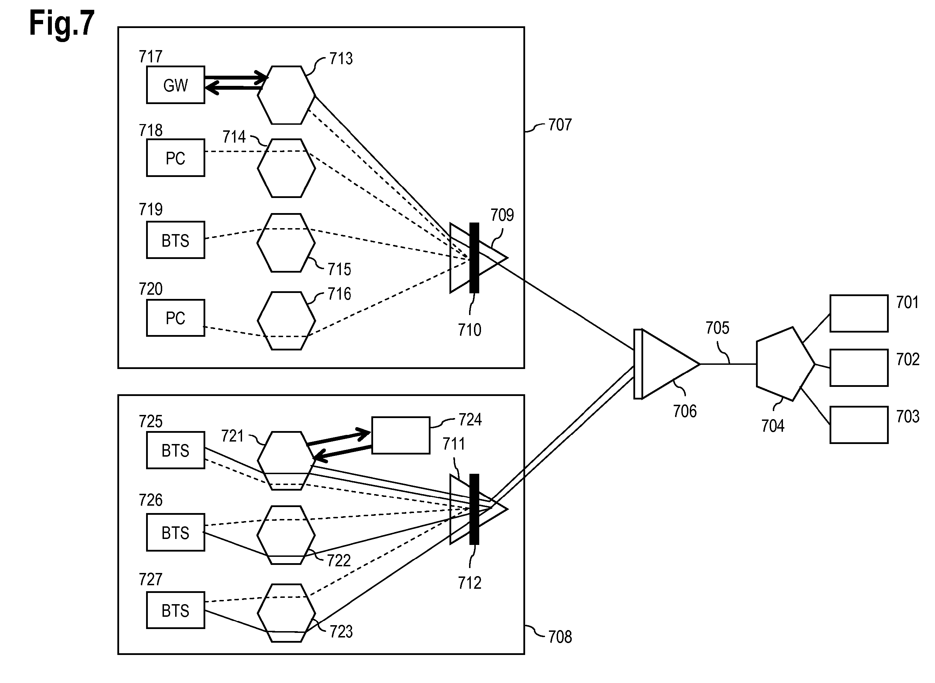

**Fig.7** shows a schematic diagram visualizing a PON with two areas utilized for ONU-to-ONU traffic, wherein a mobile network operator (MNO) can create his own network based on the optical infrastructure utilizing a FEMTO gateway and/or a content server for local break out purposes.

A mobility management entity (MME) 701, an Internet provider 702 and a video on demand server 703 are connected to an OLT 704. Each of the entities or units 701 to 703 is assigned to a particular wavelength or set of wavelengths.

The OLT 704 conveys a combined optical signal 705, e.g. with a bitrate of 1Gbps per wavelength, towards a filter 706. Said filter 706 can be a reflective multi-frequency filter that enables internal traffic for several areas.

The filter 706 conveys the traffic between the OLT 704 and the ONUs towards an area 707 and an area 708.

The area 707 is connected to the filter 706 via a passive splitter 709 with a reflector 710 (e.g., a semitransparent filter or a reflective multi-frequency filter). The splitter can also be realized as a reflective multi-frequency filter. With regard to the splitter's functionality, reference is made to the splitters 209, 211 and 402 as described above.

Accordingly, the area 708 is connected to the filter 706 via a passive splitter 711 with a reflector 712. Also, with regard to this splitter 711, reference is made to the splitters 209, 211 and 402 described above.

With regard to the area 707, a FEMTO access gateway (serving gateway) 717 communicates signalling information as well as data with an ONU 713, which is connected to the OLT 704. The FEMTO access gateway 717 is also connected via the ONU 713 to the splitter 709 utilizing a wavelength that does not pass the splitter 709 and is thus used within the area 707.

A PC 718 is connected via an ONU 714 to the splitter 709 and via the ONU 713 further to the FEMTO access gateway 717. LTE data can be exchanged with the FEMTO access gateway 717.

A base station 719 is connected via an ONU 715 to the splitter 709 and via the ONU 713 further to the FEMTO access gateway 717 communicating LTE data from the serving gateway (received via the air interface).

In addition, a PC 720 is connected via an ONU 716 to the splitter 709 and via the ONU 713 further to the FEMTO access gateway 717. LTE data can be exchanged with the FEMTO access gateway 717.

With regard to the area 708, a content server 724 for local break out purposes is connected to an ONU 721 exchanging data as well as signaling information.

Local break out internet traffic is conveyed between the ONU 721 and the OLT 704 passing the splitter 711.

A BTS 725 is connected to the ONU 721, a BTS 726 is connected via an ONU 722 to the splitter 711 and a BTS 727 is connected via an ONU 723 to the splitter 711. The BTS 725 to 727 receive LTE data from the MME 701 via the OLT 704.

Furthermore, the BTS 725 to 727 utilize a wavelength that is reflected at the splitter 711 to convey X2 interface information.

The internal traffic within the areas 707, 708 is indicated by dashed lines, which are reflected at the reflector 710 of splitter 709 or reflector 712 of splitter 711.

Hence, area 707 depicts a mixed application with a FEMTO gateway and an eNB. The FEMTO gateway (also referred to as FEMTO cell, home base station, home NodeB) may be any base station that can be deployed within the range of a cellular network. The MNO can thus efficiently utilize a part of the optical network for setting up a separate network.

Area 708 shows an X2-interface (ONU-to-ONU traffic) as well as content being provided for eNBs. The optical network is used for transporting Internet traffic separate from the MNO traffic.

Mixing the concepts suggested in areas 707 and 708 enables a network supporting FEMTO cells within a cellular network and at the same time providing an X2 interface between base stations (eNBs) of the cellular network.

In an exemplary implementation, the ONU may transmit a single channel at a time. In such case, the ONU could be tuned to a wavelength used by the OLT. Therefore, if a VPN connection to another ONU is to be established, the ONU needs to know that it should tune to an intra-domain wavelength. This can be achieved by a signaling mechanism in which the OLT notifies the target ONU of the VPN request of the initiating ONU; after acknowledgement of this request, both ONUs tune to the VPN wavelength.

### (Further) Advantages:

The solution provided enables an efficient ONU-to-ONU communication utilizing passive reflective splitters or filters.

As another advantage, multiple OLTs can be deployed utilizing disjoint optical bands.

The concept in particular supports an efficient separation between multiple vendors.

In addition, a broadcast service can be provided without any need of being processed at the OLT.

The approach supports a cost-efficient solution for a broadband connection between base stations, e.g., providing an X2 interface for LTE base stations.

The encapsulation of ONUs within a particular area allows for an efficient content delivery for subscribers within such area. This encapsulation may also be used as a closed network of, e.g., a business area or a campus.

In case of mobile backhaul (via said X2 interface), each BTS may be equipped with two receivers and two transmitters. One is assigned to normal ONU-OLT communication, the other is used for communication with up to, e.g., 7 other BTS in the local cell. Since the X2 traffic typically requires lower bandwidth compared to the uplink to the OLT, a fine adjusted subcarrier multiplexing technique can be used. The basic operating principle of UDWDM is preserved, wherein a master ONU takes the role of the OLT using a local wavelength (a wavelength that cannot get past the splitter). The other ONUs may tune their local oscillator laser (the one used for the X2 communication) to an intermediate frequency of about 1GHz.

The configuration of the cell can be conducted by the OLT that assigned a particular ONU as local master. This ONU allocates subcarriers to the other 7 ONUs. Each of the ONUs detects the entire subcarrier band, but evaluates only its assigned carrier and transmits on its assigned carrier, now with respect to the upstream wavelength (towards the master ONU). For transmissions between ONUs, the master ONU takes the role of the OLT and redirects the data, so that 7 (typically there may be less than 8 neighboring cells) subcarriers downstream and 7 subcarriers upstream may suffice (in this scenario, up- and downstream refers to the master ONU).

The ONUs may be equipped with optical I-Q-type modulators. Therefore, an optical splitting of the wavelength in independent sub-channels with a frequency spacing of about 100MHz to 200MHz may be advantageous. Each ONU may have an associated intermediate frequency at the receiver and the associated transmitter wavelengths may have a channel spacing in the order of a few hundred megahertz.

With an additional wavelength connected to the X2 interface and/or the content server in addition to the X2 handling also a local break out could be realized. Here, data connection(s) can be established from the base stations towards an Internet provider.

In another embodiment, in addition to subcarrier multiplexing, the two polarizations and the I and Q channels can be used as 4 independently addressed channels in the downstream from the master ONU.

The local BTS network is configured by the OLT and can be dynamically changed, so that, e.g., at different times of the day the cell sizes and configuration can be changed to adapt to various traffic patterns. The BTS that is under-utilized can be switched off completely in case another BTS handles its traffic.

Also for digital fronthaul applications based on OBSAI/CPR/OBRI etc. the unused wavelengths in the optical segment can be used to create a common base band processing for the connected eNBs or other BTS in the respective area (optical color). A common baseband processing unit can be located in this sector (see also Fig.6). Hence, the high bit data rate supplied to the OBSAI processing unit can be within short distances to the eNBs, which is a cost-efficient approach.

It is noted that OBRI relates to an open base band unit (BBU) radio remote head (RRH) interface. Connecting the RRH via optical fibers, operators can reduce cost spent for conventional cabling.

In case of FEMTO access points being connected to the optical network, also the FEMTO gateway can be located within the area (see also Fig.7). With the additional location of a content server in this area, a local break out solution can be provided. This reduces the traffic into the mobile operator network.

Also, peer to peer applications can be realized with such configuration. The MNO may keep traffic between subscribers of an area without having to convey the traffic to the remaining network.

In addition, the operator may in a low traffic situation switch at least one eNB to a power down mode and thus save energy.

### List of Abbreviations:

- ASN: Access Service Network
- BTS: Base Station (also referred to as Base Transceiver Station)
- CPR: Common Public Radio
- CWDM: Coarse WDM
- eNB: E-UTRAN NodeB
- E-UTRAN: Evolved UTRAN
- GGSN: Gateway GPRS Support Node
- GPRS: General Packet Radio Service
- GW: Gateway
- IP: Internet Protocol
- LBO: local break out
- LO: (optical) Local Oscillator
- LTE: Long-Term Evolution
- MME: Mobility Management Entity
- MNO: Mobile Network Operator
- OAN: Optical Access Network
- OBRI: Open BaseBandUnit (BBU) and RadioRemoteHead (RRH)
- OBSAI: Open Base Station Architecture Initiative
- OLT: Optical Line Terminal
- ONT: Optical Network Termination
- ONU: Optical Network Unit
- PC: Personal Computer
- PON: Passive Optical Network
- RNC: Radio Network Controller
- S-GW: Serving Gateway
- TDMA: Time Division Multiplexing
- UDWDM: Ultra Dense WDM
- UTRAN: Universal Terrestrial Radio Access Network
- VPN: Virtual Private Network
- WDM: Wavelength Division Multiplexing

## Claims

1. A method for data processing in a passive optical wavelength division multiplex network transmitting bidirectional data signals via a different wavelengths between an optical line terminal (204) and optical network units (213,214, 219 - 221), comprising the steps of
- distributing downstream wavelengths into a first portion of wavelengths for communication with optical network units (213, 214) of a first area (207) and
- into a second portion of wavelengths for communication with optical network units (219-221) of a second area (208),
- wherein in the first area a first resource of upstream wavelengths passes a first splitter (210) in uplink direction and wherein a second resource of upstream wavelengths is reflected for communication within the first area, and
- wherein in the second area the second resource of upstream wavelengths passes a second splitter (211) in uplink direction and wherein the first resource of upstream wavelengths is reflected for communication within the second area; and
- wherein the first resource and the second resource of upstream wavelengths are disjoint.

2. The method according to claim 1, wherein the first resource comprises a wavelength or a set of wavelengths and wherein the second resource comprises a wavelength or a set of wavelengths.

3. The method according to any of the preceding claims, wherein the splitters (209, 211) are a passive splitters.

4. The method according to any of the preceding claims, wherein the splitters (209, 211) are deployed between optical network units (213, 214; 219 - 221) and an optical line terminal (204).

5. The method according to any of the preceding claims, wherein the splitter (208, 211) comprise as reflective filter (210, 212) at least one dielectric filter and/or a waveband selective reflective filter and/or a partially reflecting mirror.

6. The method according to any of the preceding claims, wherein all resources but the first resource of wavelengths transmitted in uplink direction are reflected in downlink direction at the splitter (208, 211).

7. The method according to any of the preceding claims, wherein the second resource is at least partially substantially located in a guard band of the first resource.

8. The method according to any of the preceding claims, wherein a broadcast service is provided to the splitter via a second fiber utilizing a third resource of wavelengths, wherein the first resource and the third resource of wavelengths are disjoint.

9. The method according to any of the preceding claims, wherein the second resource is utilized for communication purposes within an optical sub-network beyond the splitter.

10. The method according to claim 9, wherein a content server utilizes at least a portion of the second resource to convey services to subscribers of the optical sub-network.

11. The method according to any of claims 9 or 10, wherein base stations are connected via the optical sub-network communicating via at least a portion of the second resource.

12. The method according to any of claims 9 to 11, wherein an optical line terminal utilizes at least a portion of the second resource to convey services to subscribers of the optical sub-network.

13. The method according to any of claims 9 to 12,
- wherein an OBSAI processing unit utilizes at least a portion of the second resource to communicate data with components of the optical sub-network or
- wherein the OBSAI processing unit utilizes at least a portion of the first resource to communicate data via the optical network with a mobile network operator.

14. The method according to any of claims 9 to 13,
- wherein a FEMTO access point utilizes at least a portion of the second resource to communicate data with components of the optical sub-network or
- wherein the FEMTO access point utilizes at least a portion of the first resource to communicate data via the optical network with a mobile network operator.

15. A passive optical wavelength division multiplexing network arranged for performing the method steps according to any of the preceding claims, the optical network comprising reflective filters (210, 212) that are arranged such that in a first area of the network :
- a first resource of upstream wavelengths passes a first splitter (209) in uplink direction and
- a second resource of upstream wavelengths, disjoint from the first resource of upstream wavelengths, is reflected in downlink direction; and in a second area of the network:
- the second resource of upstream wavelengths passes a second splitter (211) in uplink direction and the first resource of upstream wavelengths is reflected in downlink direction.

## Patentansprüche

1. Verfahren zur Datenverarbeitung in einem passiven optischen Wellenlängen-Multiplex-Netz, in dem bidirektionale Datensignale über verschiedene Wellenlängen zwischen einem Optical-Line-Terminal (204) und optischen Netzwerkeinheiten (213, 214, 219-221) übertragen werden, wobei das Verfahren die folgenden Schritte umfasst:
- Einteilen von Downstream-Wellenlängen in einen ersten Teil von Wellenlängen für die Kommunikation mit optischen Netzwerkeinheiten (213, 214) eines ersten Bereichs (207) und
- in einen zweiten Teil von Wellenlängen für die Kommunikation mit optischen Netzwerkeinheiten (219-221) eines zweiten Bereichs (208),
- wobei in dem ersten Bereich eine erste Ressource von Upstream-Wellenlängen einen ersten Splitter (210) in Uplink-Richtung durchläuft und wobei eine zweite Ressource von Upstream-Wellenlängen für eine Kommunikation in dem ersten Bereich reflektiert wird, und
- wobei in dem zweiten Bereich die zweite Ressource von Upstream-Wellenlängen einen zweiten Splitter (211) in Uplink-Richtung durchläuft und wobei die erste Ressource von Upstream-Wellenlängen für eine Kommunikation innerhalb des zweiten Bereichs reflektiert wird; und
- wobei die erste Ressource und die zweite Ressource von Upstream-Wellenlängen disjunkt sind.

2. Verfahren nach Anspruch 1, wobei die erste Ressource eine Wellenlänge oder einen Satz von Wellenlängen umfasst und wobei die zweite Ressource eine Wellenlänge oder einen Satz von Wellenlängen umfasst.

3. Verfahren nach einem der vorhergehenden Ansprüche, wobei die Splitter (209, 211) passive Splitter sind.

4. Verfahren nach einem der vorhergehenden Ansprüche, wobei die Splitter (209, 211) zwischen optischen Netzwerkeinheiten (213, 214; 219-221) und einem Optical-Line-Terminal (204) angeordnet sind.

5. Verfahren nach einem der vorhergehenden Ansprüche, wobei der Splitter (209, 211) als ein Reflexionsfilter (210, 212) zumindest einen dielektrischen Filter und/oder einen selektiven Wellenband-Reflexionsfilter und/oder einen teilweise reflektierenden Spiegel umfasst.

6. Verfahren nach einem der vorhergehenden Ansprüche, wobei alle Ressourcen außer der ersten Ressource von Wellenlängen, die in Uplink-Richtung übertragen werden, an dem Splitter (209, 211) in Downlink-Richtung reflektiert werden.

7. Verfahren nach einem der vorhergehenden Ansprüche, wobei sich die zweite Ressource zumindest teilweise wesentlich in einem Sicherheitsband der ersten Ressource befindet.

8. Verfahren nach einem der vorhergehenden Ansprüche, wobei dem Splitter über eine zweite Faser, die eine dritte Ressource von Wellenlängen verwendet, ein Übertragungsdienst zur Verfügung gestellt wird, wobei die erste Ressource und die dritte Ressource von Wellenlängen disjunkt sind.

9. Verfahren nach einem der vorhergehenden Ansprüche, wobei die zweite Ressource für Kommunikationszwecke in einem optischen Teilnetz jenseits des Splitters verwendet wird.

10. Verfahren nach Anspruch 9, wobei ein Datenserver zumindest einen Teil der zweiten Ressource verwendet, um Dienste zu den Teilnehmern des optischen Teilnetzes zu übermitteln.

11. Verfahren nach Anspruch 9 oder 10, wobei über das optische Teilnetz verbundene Basisstationen über zumindest einen Teil der zweiten Ressource kommunizieren.

12. Verfahren nach einem der Ansprüche 9 bis 11, wobei ein Optical-Line-Terminal zumindest einen Teil der zweiten Ressource verwendet, um Dienste zu den Teilnehmern des optischen Teilnetzes zu übermitteln.

13. Verfahren nach einem der Ansprüche 9 bis 12,
- wobei eine OBSAI-Verarbeitungseinheit zumindest einen Teil der zweiten Ressource verwendet, um mit Komponenten des optischen Teilnetzes Daten zu kommunizieren oder
- wobei die OBSAI-Verarbeitungseinheit zumindest einen Teil der ersten Ressource verwendet, um über das optische Netz mit einem Mobilfunkbetreiber Daten zu kommunizieren.

14. Verfahren nach einem der Ansprüche 9 bis 13,
- wobei ein FEMTO-Zugangspunkt zumindest einen Teil der zweiten Ressource verwendet, um mit Komponenten des optischen Teilnetzes Daten zu kommunizieren oder
- wobei der FEMTO-Zugangspunkt zumindest einen Teil der ersten Ressource verwendet, um mit einem Mobilfunkbetreiber über das optische Netz Daten zu kommunizieren.

15. Passives optisches Wellenlängen-Multiplex-Netz, das dazu eingerichtet ist, die Verfahrensschritte nach einem der vorhergehenden Ansprüche auszuführen, wobei das optische Netz Reflexionsfilter (210, 212) umfasst, die derart eingerichtet sind, dass in einem ersten Bereich des Netzes:
- eine erste Ressource von Upstream-Wellenlängen einen ersten Splitter (209) in Uplink-Richtung durchläuft und
- eine zweite Ressource von Upstream-Wellenlängen, die von der ersten Ressource von Upstream-Wellenlängen disjunkt ist, in Downlink-Richtung reflektiert wird; und in einem zweiten Bereich des Netzes:
- die zweite Ressource von Upstream-Wellenlängen einen zweiten Splitter (211) in Uplink-Richtung durchläuft und die erste Ressource von Upstream-Wellenlängen in Downlink-Richtung reflektiert wird.

## Revendications

1. Procédé de traitement de données dans un réseau optique passif à multiplexage par répartition en longueur d'onde émettant des signaux de données bidirectionnels, par le biais de longueurs d'onde distinctes, entre un terminal de ligne optique (204) et des unités de réseau optique (213, 214, 219 - 221), comprenant les étapes ci-dessous consistant à :
- répartir des longueurs d'onde en aval en une première partie de longueurs d'onde destinée à la communication avec des unités de réseau optique (213, 214) d'une première zone (207) ; et
- en une seconde partie de longueurs d'onde destinée à la communication avec des unités de réseau optique (219 - 221) d'une seconde zone (208) ;
- dans lequel, dans la première zone, une première ressource de longueurs d'onde en amont franchit un premier diviseur (2.10) en direction de liaison montante, et dans lequel une deuxième ressource de longueurs d'onde en amont est réfléchie pour la communication au sein de la première zone ; et
- dans lequel, dans la seconde zone, la deuxième ressource de longueurs d'onde en amont franchit un second diviseur (211) en direction de liaison montante, et dans lequel la première ressource de longueurs d'onde en amont est réfléchie pour la communication au sein de la seconde zone ; et
- dans lequel la première ressource et la deuxième ressource de longueurs d'onde en amont sont disjointes.

2. Procédé selon la revendication 1, dans lequel la première ressource comprend une longueur d'onde ou un ensemble de longueurs d'onde, et dans lequel la deuxième ressource comprend une longueur d'onde ou un ensemble de longueurs d'onde.

3. Procédé selon l'une quelconque des revendications précédentes, dans lequel les diviseurs (209, 211) correspondent à des diviseurs passifs.

4. Procédé selon l'une quelconque des revendications précédentes, dans lequel les diviseurs (209, 211) sont déployés entre des unités de réseau optique (213, 214 ; 219 - 221) et un terminal de ligne optique (204).

5. Procédé selon l'une quelconque des revendications précédentes, dans lequel les diviseurs (208, 211) comportent, en qualité de filtre réflecteur (210, 212), au moins un filtre diélectrique et/ou un filtre réflecteur à sélection de gamme d'ondes et/ou un miroir partiellement réfléchissant.

6. Procédé selon l'une quelconque des revendications précédentes, dans lequel toutes les ressources, à l'exception de la première ressource de longueurs d'onde transmise en direction de liaison montante, sont réfléchies en direction de liaison descendante au niveau du diviseur (208, 211).

7. Procédé selon l'une quelconque des revendications précédentes, dans lequel la deuxième ressource est au moins partiellement sensiblement située dans une bande de garde de la première ressource.

8. Procédé selon l'une quelconque des revendications précédentes, dans lequel un service de diffusion est fourni au diviseur par le biais d'une seconde fibre utilisant une troisième ressource de longueurs d'onde, dans lequel la première ressource et la troisième ressource de longueurs d'onde sont disjointes.

9. Procédé selon l'une quelconque des revendications précédentes, dans lequel la deuxième ressource est utilisée à des fins de communication au sein d'un sous-réseau optique situé au-delà du diviseur.

10. Procédé selon la revendication 9, dans lequel un serveur de contenu utilise au moins une partie de la deuxième ressource en vue d'acheminer des services à des abonnés du sous-réseau optique.

11. Procédé selon l'une quelconque des revendications 9 ou 10, dans lequel des stations de base sont connectées par le biais du sous-réseau optique communiquant par l'intermédiaire d'au moins une partie de la deuxième ressource.

12. Procédé selon l'une quelconque des revendications 9 à 11, dans lequel un terminal de ligne optique utilise au moins une partie de la deuxième ressource en vue d'acheminer des services à des abonnés du sous-réseau optique.

13. Procédé selon l'une quelconque des revendications 9 à 12,
- dans lequel une unité de traitement OBSAI utilise au moins une partie de la deuxième ressource en vue de communiquer des données avec des composants du sous-réseau optique ; ou
- dans lequel l'unité de traitement OBSAI utilise au moins une partie de la première ressource en vue de communiquer des données par l'intermédiaire du réseau optique avec un opérateur de réseau mobile.

14. Procédé selon l'une quelconque des revendications 9 à 13,
- dans lequel un point d'accès FEMTO utilise au moins une partie de la deuxième ressource en vue de communiquer des données avec des composants du sous-réseau optique ; ou
- dans lequel le point d'accès FEMTO utilise au moins une partie de la première ressource en vue de communiquer des données par l'intermédiaire du réseau optique avec un opérateur de réseau mobile.

15. Réseau optique passif à multiplexage par répartition en longueur d'onde agencé de manière à mettre en oeuvre les étapes de procédé selon l'une quelconque des revendications précédentes, le réseau optique comprenant des filtres réflecteurs (210, 212) qui sont agencés de sorte que dans une première zone du réseau :
- une première ressource de longueurs d'onde en amont franchit un premier diviseur (209) en direction de liaison montante ; et
- une deuxième ressource de longueurs d'onde en amont, disjointe de la première ressource de longueurs d'onde en amont, est réfléchie en direction de liaison descendante ; et dans une seconde zone du réseau :
- la deuxième ressource de longueurs d'onde en amont franchit un second diviseur (211) en direction de liaison montante et la première ressource de longueurs d'onde en amont est réfléchie en direction de liaison descendante.
